# FASCICULE DE BREVET EUROPEEN

(11) **EP 0 406 049 B1**
(45) Date de publication et mention de la délivrance du brevet: **08.09.1993**
(21) Numéro de dépôt: 90401665.6
(22) Date de dépôt: 14.06.1990
(51) Int. Cl.: B25H 1/00, A47F 7/16

(54) **Unité compacte et ergonomique d'encadrement d'images**
Kompakte und ergonomische Einheit für das Einrahmen von Bildern
Compact and ergonomic unit for the framing of pictures

(30) Priorité: 19.06.1989 FR 8908122
(43) Date de publication de la demande: 02.01.1991
(73) Titulaire: ALBADECOR S.A., F-87310 Saint Laurent Sur Gorre (FR)
(72) Inventeur: Chanoine, Michel, F-87000 Limoges (FR); Magisson, Pascal, F-87700 Saint Priest (FR)
(74) Mandataire: Moncheny, Michel

(56) Documents cités:
- DE-U- 8 620 270
- FR-A- 2 146 016
- FR-A- 2 620 609
- FR-A- 2 622 137
- GB-A- 1 073 087
- US-A- 1 784 577
- US-A- 4 029 024

## Description

La présente invention concerne une unité compacte et ergonomique d'encadrement d'images à partir de baguettes moulurées.

De nombreuses grandes surfaces et petits commerces souhaitent proposer à la clientèle une prestation concernant les encadrements d'images.

Pour effectuer ces prestations les commerçants disposent d'une gamme de baguettes de grande longueur, et une fois le choix effectué par le client, il est nécessaire de découper la baguette aux dimensions de l'image ou du cadre à obtenir, d'assembler les portions découpées, de découper une plaque de verre, un passe-partout et un fond en carton aux dimensions du cadre ainsi réalisé. Une fois ces découpes faites, il est nécessaire d'effectuer le montage du cadre et de fixer le fond par rapport au cadre. Cette dernière opération est réalisée de façon connue à l'aide d'agrafes.

En ce qui concerne la découpe des baguettes il est nécessaire que le prestataire dispose d'une scie particulière permettant de découper les baguettes selon un angle variable, égal à 45° pour un cadre rectangulaire par exemple. Il existe dans le commerce de telles scies qui présentent une platine mobile par rapport à des étaux fixes. Les portions de baguette ainsi obtenues sont généralement assemblées à l'aide d'agrafes mises en place au moyen d'une agrafeuse.

Enfin pour la découpe des cartons de fond, des passe-partout et du verre, le prestataire utilise une simple table et des outils tranchants tels qu'un cutter ou un diamant selon la nature du verre.

Afin de pouvoir prendre en considération les différents types de moulures, les clients disposent d'un choix d'échantillons de baguettes comprenant deux portions assemblées en angle afin de constituer une partie de cadre. La demande de brevet FR-A-2 620 609 propose un panneau de présentation de tels échantillons.

Actuellement dans les installations existantes les différents postes de travail sont séparés les uns des autres ce qui nécessite un espace relativement important pour pouvoir proposer une telle prestation d'encadrement. En effet, il est nécessaire de prévoir autour de chacune des machines une aire de travail permettant d'effectuer l'opération correspondante. Aussi, pour le poste de découpe il faut prévoir au moins d'un côté une longueur correspondant sensiblement à la longueur d'une baguette entière. De même pour l'agrafeuse, il est nécessaire de prévoir une aire de travail dont la plus grande dimension doit être supérieure à celle des plus grands cadres à réaliser.

On remarque également sur les dispositifs de présentation que seule une des faces est utilisée ce qui, compte tenu des grands nombres d'échantillons disponibles, oblige le prestataire à utiliser une grande surface au sol.

On remarque également que lorsque le client fait un essai de coordination de son image avec un échantillon de baguette, le prestataire est obligé de se déplacer et de se mettre du même côté que le client pour pouvoir conseiller celui-ci. En effet, les essais s'effectuent généralement soit sur une tablette horizontale, soit sur un panneau vertical fixe généralement juxtaposé au panneau de présentation des échantillons.

On constate également sur ces types d'installations que les accessoires des machines ou de fabrication sont éparpillés en différents endroits de l'installation.

De plus, chacun des postes de travail de l'installation requiert une alimentation électrique, soit pour faire fonctionner la machine, soit pour les éclairages. Aussi, ces installations sont encombrées de fils électriques, de rallonges et de prises multiples. Un tel montage électrique est préjudiciable à la sécurité plus particulièrement quand on tient compte du fait que les matériaux travaillés sont inflammables et qu'il y a une présence de sciure de bois quasi inévitable à chacun des postes.

Une telle installation outre son aspect inesthétique présente de nombreux inconvénients. Un premier inconvénient est celui de nécessiter une grande surface au sol ce qui est incompatible avec la recherche d'une diversification à moindres frais par certains prestataires et incompatible également avec les coûts des surfaces commerciales.

De plus, le prestataire doit effectuer un grand nombre de déplacements pour la réalisation d'un cadre. Ces déplacements conduisent à des coûts de prestation élevés, à une baisse de rendement et à une mauvaise qualité de réalisation. Le niveau de qualité inférieur est aussi dû au fait que les manipulations à chacun des postes sont perturbées par la présence des machines des autres postes de travail, au mauvais éclairage des postes ou tout au moins à des variations de la qualité d'éclairage d'un poste à l'autre.

Le conseil qui peut être donné au client est également perturbé lors du choix, car le prestataire de l'installation est obligé de s'interrompre dans son travail pour aider ce client dans le choix de son échantillon par exemple.

Le but de la présente invention est de pallier ces inconvénients en proposant une unité d'encadrement qui soit ergonomique, compacte, qui permette un travail en toute sécurité, tout en favorisant l'échange client utilisateur, et d'un prix de revient et d'un coût de fonctionnement peu élevés. A cet effet, l'unité compacte et ergonomique d'encadrement d'images à partir de baguettes moulurées selon l'invention comprend un comptoir avec un plateau dans lequel sont intégrés des moyens de découpe des baguettes, des moyens d'agrafage des portions de baguettes découpées, des moyens de découpe du verre, du carton et des passe-partout, des moyens de présentation des échantillons de baguettes et des moyens d'essais de coordination image - passe-partout - baguette, ainsi qu'un raccordement électrique extérieur unique.

Selon une autre caractéristique, l'unité d'encadrement selon l'invention se caractérisé en ce que les moyens intégrés de découpe comprennent une scie circulaire fixée sur une platine solidaire du plateau et montée mobile en rotation et une paire d'étaux à deux mâchoires, l'une fixe l'autre mobile, solidaire du plateau, de façon à assujettir les baguettes par rapport à la scie.

L'unité selon l'invention se caractérisé également en ce que les moyens intégrés de découpe sont reliés à un dispositif d'aspiration disposé sous le plateau.

Selon une autre caractéristique, les moyens d'agrafage des baguettes comprennent une agrafeuse mécanique avec une platine fixe, la platine étant décalée angulairement de 45° par rapport à l'axe longitudinal du comptoir 10.

Selon une caractéristique particulière de l'invention, les moyens de découpe du verre, du carton et des passe-partout comprennent une règle graduée et un massicot coulissant.

Les moyens de présentation des échantillons de baguettes selon l'invention comprennent au moins un présentoir monté mobile en rotation autour de son axe longitudinal.

Selon l'invention les moyens d'essais de coordination comprennent un panneau dont le plan est sensiblement vertical, qui est monté mobile en rotation autour d'un axe perpendiculaire au plateau de façon à permettre l'accès visuel de la même face de ce panneau de part et d'autre du comptoir par pivotement autour de l'axe de rotation.

L'unité selon l'invention se caractérisé également en ce qu'elle comprend un toit disposé au dessus du comptoir et fixé à ce comptoir par des montants de façon que l'ensemble soit auto-porteur.

La présente invention est décrite ci-dessous selon un mode de réalisation particulier et en regard des dessins annexés sur lesquels :
- la figure 1 représente une vue en perspective de face d'une unité d'encadrement selon l'invention,
- la figure 2 représente une vue en élévation de l'arrière de l'unité d'encadrement selon l'invention, et
- la figure 3 représente une vue en coupe selon la ligne 3-3 de la figure 2.

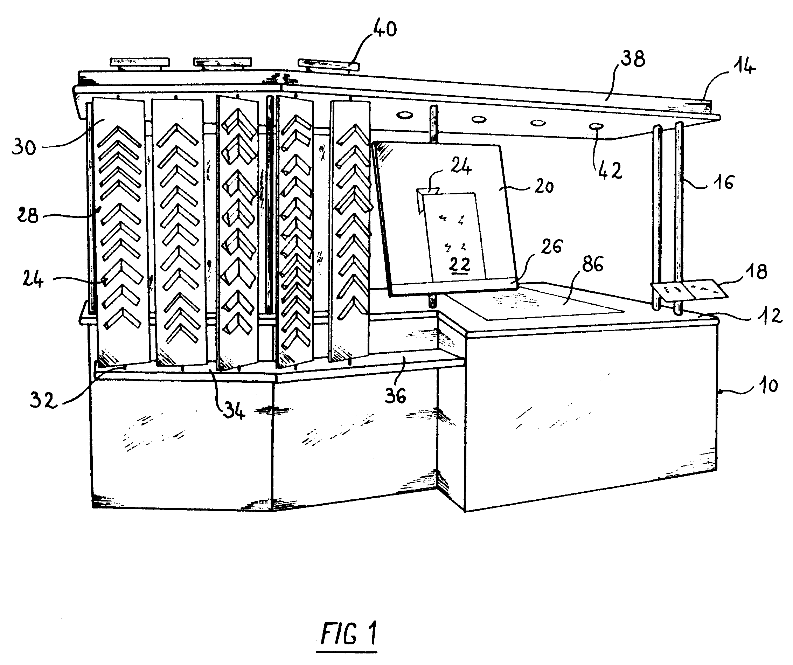

L'unité d'encadrement représentée à la figure 1 comprend un comptoir 10 avec un plateau 12 surmonté d'un toit 14 fixé à ce comptoir par des montants 16.

Le plateau 12 est situé à une hauteur telle, qu'il peut être utilisé comme plan de travail. Immédiatement au dessus de ce plan de travail, une console 18, fixée à l'un des montants 16, supporte un catalogue publicitaire. Sur un autre montant il est prévu un panneau 20 d'essais de coordination entre une image 22 et un échantillon de baguette 24. Ce panneau disposé sensiblement verticalement comprend un rebord 26 destiné à fixer l'image 22 par sa partie inférieure et à la maintenir plaquée sur le panneau 20. Ce panneau 20 a une surface métallique et les échantillons de baguettes 24 comprennent sur leurs faces destinées à venir en contact avec ce panneau, une plaquette de matériau magnétique de surface telle qu'elle permet à l'échantillon de rester plaqué sur le panneau une fois mis en place. Ce panneau 20 est monté à rotation autour du montant sur lequel il est fixé. Par ailleurs, ce panneau est disposé entre le plateau 12 du comptoir 10 et le toit 14 de façon que la même face du panneau puisse être visible tant par le client que par le prestataire par simple rotation autour du montant. D'autre part, il est prévu un espace entre la partie inférieure du panneau et le plateau 12 de façon que le panneau puisse être mis en rotation y compris lorsque ce même plateau 12 est encombré d'objets.

L'unité d'encadrement comprend également des moyens de présentation 28 des échantillons de baguettes 24 composés de plusieurs présentoirs 30 montés mobiles en rotation autour de leurs axes longitudinaux. Ces présentoirs à deux faces sont munis à chacune de leurs extrémités d'un axe 32 qui peut tourner en partie supérieure dans un logement ménagé dans le toit 14 et en partie inférieure dans un logement ménagé dans une tablette 34, solidaire du comptoir, située à une hauteur inférieure à celle du plateau 12 mais dans un plan parallèle à celui-ci. Les deux faces des présentoirs 30 sont métalliques de façon que les plaquettes magnétiques des échantillons 24 de baguettes puissent maintenir ces échantillons de baguettes sur ces présentoirs 30. De façon connue ces échantillons sont constitués d'un assemblage de deux portions de baguettes ayant chacune une coupe à onglet et fixées l'une à l'autre pour former un angle de 90°. Ainsi les échantillons 24 de baguettes peuvent être disposés en chevron sur toute la hauteur des présentoirs 30. La largeur de ces présentoirs 30 est légèrement inférieure à la distance séparant les axes 32 de deux présentoirs adjacents de telle façon que les présentoirs 30 puissent tourner indépendamment les uns des autres.

Ainsi que cela est représenté sur la figure 1, les moyens de présentation 28 sont adjacents au panneau 20 d'essais de coordination et disposés de telle façon que le présentoir 30 adjacent au panneau 20 puisse tourner librement quelle que soit la position de ce panneau et inversement que le panneau 20 puisse tourner librement quelle que soit la position du présentoir 30 adjacent.

La tablette 34 se prolonge sous le panneau 20 d'essais de coordination et dégage une surface libre formant étagère 36.

Le toit 14 comprend un bandeau 38 au dessus duquel sont disposés des éclairages 40 destinés à éclairer les présentoirs 30. Par ailleurs, sur la face inférieure du toit en vis à vis du plateau 12 sont intégrés des éclairages 42 destinés à éclairer le plateau 12.

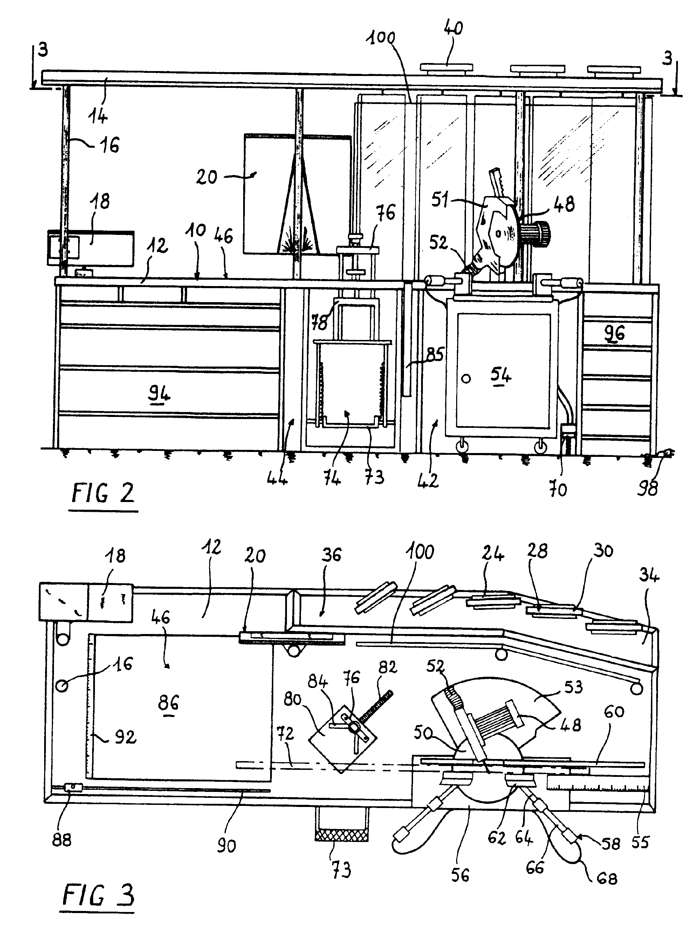

La figure 2 qui est une vue de l'arrière de l'unité d'encadrement en élévation verticale montre les trois postes de travail, un poste de découpe des baguettes 42, un poste d'agrafage 44 des portions de baguettes découpées et un poste 46 de découpe du verre, du carton et des passe-partout, ces trois postes étant intégrés dans le comptoir 10.

Le poste de découpe des baguettes comprend une scie circulaire 48 de type connu et adaptée pour la découpe de baguettes moulurées grâce à une vitesse de rotation et à une denture adéquates.

Ainsi qu'on le voit sur la coupe de la figure 3, cette scie 48 est fixée sur une platine 50 circulaire, montée rotative autour d'un axe passant par son centre, de façon à pouvoir faire varier l'angle de coupe de la scie. Cette scie est munie d'une protection 51 qui fait office également de collecteur de sciure qui est aspirée à travers un conduit 52 par l'aspirateur 54. Cet aspirateur 54 est insonorisé et logé sous le comptoir. Le logement est lui-même capitonné pour faire office de chambre sourde. Une ouverture 53 pratiquée dans le plateau 12 permet le libre mouvement du conduit 52. La platine 50 est intégrée dans une platine fixe 56 elle-même intégrée dans le plateau 12. Sur cette platine fixe 56 il est prévu une paire d'étaux 58 dont une mâchoire 60 est fixe et une mâchoire 62 est mobile. Cette mâchoire mobile 62 est fixée à l'extrémité d'une tige 64 montée coulissante dans un tube 66 et poussée à l'extérieur de ce tube par un ressort.

Par ailleurs, cette tige 64 est solidaire de l'extrémité d'un câble 68, du type câble vélo monté dans une gaine, l'autre extrémité du câble étant solidaire d'une pédale 70 ainsi que représenté sur la figure 2.

La scie 48 est également complétée par une règle graduée 55 fixe, définissant la bonne position de la baguette pour l'obtention d'une portion de longueur donnée.

Sur la figure 3, une baguette 72 est montrée dans la position bloquée entre les mâchoires 60 et 62 des étaux 58.

Le poste d'agrafage 44 comprend une agrafeuse mécanique 74 à pédale 73 dont l'enclume 76 et le marteau 78 sont mobiles tandis que la platine 80 est intégrée dans le plateau 12 du comptoir 10. Cette platine 80 rectangulaire est disposée à 45° par rapport à l'axe longitudinal du comptoir. Ainsi, les côtés de la platine sont orientés à 45° par rapport à l'axe de pivotement de la pédale 73. Le magasin d'agrafes 82 est également intégré dans le plateau 12 et il est accessible directement par le dessus. Sur la platine 80 des guides 84 sont prévus pour permettre un bon positionnement des baguettes découpées lors de leur assemblage.

De même, un bras relevable 85, est fixé au plateau 12 par une charnière à blocage, connue en elle-même. Le mouvement de relevage s'effectue perpendiculairement à l'axe longitudinal du comptoir.

Le poste 46 de découpe du verre, du carton et des passe-partout comprend une plaque amovible 86 de découpe, en matériau tendre de façon à pouvoir être entaillée par les lames des outils de coupe tels que des cutters. Cette plaque amovible 86 est encastrée dans le plan de travail 12 de façon à éviter toute partie en saillie. De plus un massicot 88 du type coulissant sur rails 90 permet la découpe des différentes plaques de matériaux utilisés.

Les rails 90 sont montés parallèlement à l'axe longitudinal du comptoir. Un accessoire de mesure tel qu'une règle 92 est prévu parallèlement à l'un des côtés de la plaque amovible 86 et pour éviter de faire saillie, cette règle 92 est également intégrée dans le plateau 12.

La partie de comptoir 10 située au droit du poste de découpe 46 comprend plusieurs étagères 94 destinées au stockage des différentes plaques de carton et de verre. De même à l'extrémité opposée du comptoir il est prévu des rangements 96 destinés à regrouper les différents accessoires utilisés à chacun des postes de travail.

Une alimentation électrique unique 98 permet de relier l'unité d'encadrement à une source d'énergie électrique. Par contre le réseau électrique de distribution au sein de l'unité elle-même est totalement intégré et les câbles d'alimentation des éclairages disposés sur le toit passent à travers les montants 16 qui sont des montants tubulaires.

Sur la figure 3 on a représenté un écran de sécurité 100, en verre par exemple, interposé entre les moyens de présentation 28 et les postes de découpe et d'agrafage.

Le fonctionnement de l'unité d'encadrement selon l'invention est maintenant décrit.

Le client accède à la partie avant de l'unité d'encadrement telle qu'elle est représentée à la figure 1. Il peut tout d'abord consulter le catalogue disposé sur le support 18, afin de prendre connaissance des prestations offertes. Le client dispose de l'étagère 36 pour poser ses affaires personnelles afin d'avoir les mains libres pour manipuler les présentoirs 30 et faire le choix d'un certain nombre d'échantillons. Il place ensuite son image 22 sur le panneau 20 en bloquant la partie inférieure de l'image dans le rebord 26. Il place ensuite dans le coin supérieur gauche ou droit de son image un des échantillons 24 de baguettes qu'il aura préalablement retenu afin d'effectuer son choix définitif. Au cours de ses essais il peut faire pivoter le panneau 20 de façon que le prestataire situé de l'autre côté du comptoir puisse également donner son avis. Dans ce cas, le prestataire peut proposer des échantillons des passe-partout de façon à coordonner l'ensemble image-passe-partout - baguette.

Une fois le choix effectué et le type de baguette retenu, le prestataire situé derrière l'unité telle que représentée à la figure 2, après avoir mesuré les dimensions de l'image à encadrer, entame la fabrication du cadre proprement dit. Le prestataire place la baguette 72 dans la paire d'étaux 58 après l'avoir positionnée à la bonne longueur puis effectue au moyen de la scie 48 une découpe à 45° par exemple pour un cadre rectangulaire. Une fois la portion découpée, il exerce une pression sur la pédale 70 de façon que le câble 68 tire la tige 64 et la fasse coulisser au sein du tube 66 provoquant ainsi le retrait de la mâchoire mobile 62 et libérant la portion découpée ainsi que la portion restante de la baguette. De façon connue la mise en route de la scie provoque simultanément la mise en route de l'aspirateur 54 de façon à collecter la sciure.

Une fois les portions de baguettes découpées le prestataire les assemble les unes avec les autres au moyen de l'agrafeuse 74. Le prestataire saisit deux portions de baguettes, une dans chaque main, qu'il vient positionner en appui sur la platine fixe 80, entre les cales 84, de façon que l'angle d'aboutement se situe entre l'enclume 76 et le marteau 78 mobiles. Une fois les portions correctement positionnées, le prestataire exerce au pied une pression sur la pédale 73 de l'agrafeuse 74 de façon à faire pénétrer une agrafe, simultanément dans les deux portions de baguettes à assembler. Une fois le cadre terminé, celui-ci est mis en attente et le prestataire procède alors à la découpe du fond, du verre et éventuellement du passe-partout.

Les plaques de carton utilisées pour les fonds et pour les passe-partout sont prélevées sur les étagères 94 et mises en place sur la plaque 86. Au moyen du massicot 88, le prestataire procède à la découpe aux dimensions de ces éléments cartonnés. La plaque 86 lui permet par ailleurs de réaliser des finitions de découpe mais également de découper les plaques de verre minéral ou organique.

Le prestataire procède alors au montage de l'ensemble du cadre. Il utilise pour ce faire des accessoires connus tels qu'une agrafeuse pour le blocage de l'ensemble verre - passe-partout - image - fond à l'intérieur du cadre, mais également du ruban adhésif et autres fixations de cadre permettant de l'accrocher.

Les avantages procurés par l'unité d'encadrement selon l'invention sont nombreux.

L'intégration de l'ensemble des postes avec superposition des espaces de travail permet un gain de place important.

Plus particulièrement, l'orientation à 45° de la platine d'agrafage permet un gain de place substantiel.

En effet, la baguette à découper initialement d'une longueur approximative de 2 à 3 mètres, repose entièrement sur toute la longueur du comptoir, chevauchant ainsi les postes d'agrafage et de découpe du verre, du carton et des passe-partout lorsqu'elle est en cours de découpe. De même lors de l'agrafage les portions de baguettes découpées débordent sur les postes 42 et 46 de découpe à la scie et de découpe du verre, du carton et des passe-partout.

On constate également que le prestataire travaillant à n'importe lequel des postes de découpe 42, 46, ou d'agrafage 44, peut sans lâcher le travail en cours consulter le panneau 20 que lui montre un client.

De même le client peut faire tourner le panneau 20 lorsque le prestataire est par exemple en train d'agrafer des portions de baguettes découpées au poste d'agrafage 44, grâce à la surélévation de ce panneau 20.

En plus d'être compacte, cette unité est parfaitement ergonomique puisque les déplacements du prestataire derrière le comptoir sont réduits au minimum et qu'il dispose de tous les accessoires à portée de mains.

De même, le plan de travail est parfaitement éclairé ce qui permet de faire des finitions de qualité et les clients peuvent également faire leur choix de baguettes dans des conditions d'éclairage très satisfaisantes qui conduisent à une bonne restitution des couleurs.

La sécurité est également respectée puisque l'écran 100 protège les postes de découpe 42 et d'agrafage 46. Même en cas de maladresse ou d'introduction d'un bras entre deux présentoirs 30 l'écran 100 évite tout accident. De même l'ensemble des circuits électriques de l'unité étant intégré, seul un câble électrique 98 assure le raccordement ce qui limite tous les risques inhérents aux raccordements amovibles et multiples.

L'unité d'encadrement qui vient d'être décrite peut également être complétée par des étagères de stockage des baguettes disposées parallèlement au comptoir et en arrière de celui-ci, une liaison par chaîne amovible entre ces étagères et le comptoir permettant de délimiter une aire de déplacement du prestataire en évitant tout accès par des personnes non autorisées à la face arrière du comptoir.

De même l'agrafeuse mécanique à pédale peut être remplacée par une agrafeuse électrique.

Les étaux 58 selon une variante de l'invention peuvent disposer de mâchoires 62 mobiles mais entraînées par des vérins électriques. Dans ce cas la pédale 70 est remplacée par un contacteur au pied.

Les présentoirs 30 à deux faces tels qu'ils viennent d'être décrits peuvent être remplacés par des parallélépipèdes, de façon à disposer de quatre faces au lieu de deux, augmentant ainsi la surface de présentation.

## Revendications

1. Unité compacte et ergonomique d'encadrement d'images à partir de baguettes moulurées comprenant un comptoir (10) avec un plateau (12) dans lequel sont intégrés des moyens de découpe (42) des baguettes, des moyens d'agrafage (44) des portions de baguettes découpées, des moyens de découpe (46) du verre, du carton et des passe-partout, des moyens de présentation (28) des échantillons (24) de baguettes et des moyens d'essais de coordination image - passe-partout - baguette, ainsi qu'un raccordement électrique (98) extérieur unique.

2. Unité selon la revendication 1, caractérisée en ce que les moyens intégrés de découpe (42) des baguettes comprennent une scie circulaire (48) fixée sur une platine (50) solidaire du plateau (12) et montée mobile en rotation par rapport à ce plateau.

3. Unité selon la revendication 1 ou 2, caractérisée en ce que les moyens intégrés de découpe (42) des baguettes comprennent en outre une paire d'étaux (58) à deux mâchoires (60,62), l'une fixe et l'autre mobile, solidaires du plateau (12), de façon à assujettir les baguettes (72) par rapport aux moyens de découpe.

4. Unité selon la revendication 3, caractérisée en ce que la mâchoire mobile (62) est solidaire de moyens d'entraînement mécanique à pressage automatique.

5. Unité selon la revendication 4, caractérisée en ce que les moyens d'entraînement mécanique comprennent un vérin électrique.

6. Unité selon l'une quelconque des revendications précédentes, caractérisée en ce que les moyens intégrés de découpe (42) des baguettes sont reliés à un dispositif d'aspiration (54) disposé sous le plateau (12) du comptoir (10).

7. Unité selon l'une quelconque des revendications précédentes, caractérisée en ce que les moyens d'agrafage (44) des baguettes comprennent une agrafeuse (74) mécanique avec une platine (80) fixe orientée à 45° par rapport à l'axe longitudinal du comptoir.

8. Unité selon la revendication 7, caractérisée en ce que le magasin (82) d'agrafes est intégré dans le plateau (12) et accessible par le dessus.

9. Unité selon l'une quelconque des revendications précédentes, caractérisée en ce que les moyens de découpe (46) du verre, du carton et des passe-partout comprennent une plaque (86) amovible de matériau tendre de façon qu'elle puisse être entaillée par des outils de découpe.

10. Unité selon l'une quelconque des revendications précédentes, caractérisée en ce que les moyens de découpe (46) du verre, du carton et des passe-partout comprennent une règle (92) graduée et un massicot (88) coulissant, solidaires du plateau (12).

11. Unité selon l'une quelconque des revendications précédentes, caractérisée en ce que les moyens de présentation (28) des échantillons (24) de baguettes comprennent au moins un présentoir (30) monté mobile en rotation autour de son axe longitudinal.

12. Unité selon la revendication 11, caractérisée en ce que le présentoir mobile comprend au moins deux faces.

13. Unité selon l'une quelconque des revendications 11 ou 12, caractérisée en ce que les échantillons (24) de baguettes comprennent des plaquettes de matériau magnétique et en ce que le présentoir (30) mobile a une surface extérieure métallique de façon que les échantillons se fixent de façon amovible sur le présentoir mobile.

14. Unité selon l'une quelconque des revendications précédentes, caractérisée en ce que les moyens d'essais de coordination comprennent un panneau (20) sensiblement vertical et monté mobile en rotation autour d'un axe perpendiculaire au comptoir de façon à permettre l'accès visuel de la même face de ce panneau de part et d'autre du comptoir.

15. Unité selon la revendication 14, caractérisée en ce que le panneau (20) a une surface métallique de façon à recevoir les échantillons de baguettes munis de plaquettes de matériau magnétique.

16. Unité selon la revendication 14 ou 15, caractérisée en ce que le panneau (20) comprend un rebord (26) en partie inférieure de façon à retenir une image (22) plaquée sur ce panneau.

17. Unité selon l'une quelconque des revendications précédentes, caractérisée en ce qu'elle comprend un toit (14) disposé au dessus du comptoir (10) et fixé à celui-ci par des montants (16) de façon que l'ensemble soit auto-porteur.

18. Unité selon la revendication 17, caractérisée en ce qu'elle comprend des éclairages (40) fixés au toit et en ce que les câbles d'alimentation électrique passent à travers les montants.

## Patentansprüche

1. Kompakte und ergonomische Einheit zum Einrahmen von Bildern mit gesickten Leisten, umfassend eine Theke (10) mit einer Platte (12), in die Einrichtungen (42) zum Schneiden der Leisten, Einrichtungen (44) zum Heften der geschnittenen Leistenabschnitte, Einrichtungen (46) zum Schneiden des Glases, des Kartons und der Passepartouts, Einrichtungen (28) zur Präsentation der Leistenmuster (24) und Einrichtungen zur Durchführung von Versuchen für die Zusammenstellung von Bild, Passepartout und Leiste sowie einen einzigen äußeren elektrischen Anschluß (98).

2. Einheit nach Anspruch 1, dadurch gekennzeichnet, daß die integrierten Einrichtungen (42) zum Schneiden der Leisten eine Kreissäge (48) umfassen, die auf einer Platine (50) befestigt ist, die mit der Platte (12) fest verbunden ist und bezüglich dieser Platte bezüglich Drehung beweglich montiert ist.

3. Einheit nach Anspruch 1 oder 2, dadurch gekennzeichnet, daß die integrierten Einrichtungen (42) zum Schneiden der Leisten außerdem ein Schraubstockpaar (58) mit zwei Backen (60, 62) umfassen, deren eine feststehend und deren andere beweglich ist und die mit der Platte (12) fest verbunden sind, so daß die Leisten (72) bezüglich der Schneideinrichtungen befestigt sind.

4. Einheit nach Anspruch 3, dadurch gekennzeichnet, daß die bewegliche Backe (62) mit mechanischen Antriebsmitteln mit automatischer Pressung fest verbunden ist.

5. Einheit nach Anspruch 4, dadurch gekennzeichnet, daß die mechanischen Antriebsmittel eine elektrische Hubvorrichtung umfassen.

6. Einheit nach einem der vorhergehenden Ansprüche, dadurch gekennzeichnet, daß die integrierten Einrichtungen (42) zum Schneiden der Leisten mit einer Absaugvorrichtung (54) verbunden sind, die unter der Platte (12) der Theke (10) angeordnet ist.

7. Einheit nach einem der vorhergehenden Ansprüche, dadurch gekennzeichnet, daß die Einrichtungen (44) zum Heften der Leisten eine mechanische Heftvorrichtung (74) mit einer feststehenden Platine (80) umfassen, die bezüglich der Längsachse der Theke in einem Winkel von 45° gerichtet ist.

8. Einheit nach Anspruch 7, dadurch gekennzeichnet, daß das Heftklammernmagazin (82) in die Platte (12) integriert ist und von oben zugänglich ist.

9. Einheit nach einem der vorhergehenden Ansprüche, dadurch gekennzeichnet, daß die Einrichtungen (46) zum Schneiden des Glases, des Kartons und der Passepartouts eine abnehmbare Platte (86) aus einem weichen, für Schneidwerkzeuge einschneidbaren Werkstoff umfassen.

10. Einheit nach einem der vorhergehenden Ansprüche, dadurch gekenneichnet, daß die Einrichtungen (46) zum Schneiden des Glases, des Kartons und der Passepartouts ein Meßlineal (92) und eine verschiebbare Schneidvorrichtung (88) umfassen, die mit der Platte (12) fest verbunden sind.

11. Einheit nach einem der vorhergehenden Ansprüche, dadurch gekennzeichnet, daß die Einrichtungen (28) zur Präsentation der Leistenmuster (24) wenigstens einen Präsentationsständer (30) umfassen, der bezüglich Drehung um seine Längsachse beweglich montiert ist.

12. Einheit nach Anspruch 11, dadurch gekennzeichnet, daß der bewegliche Präsentationsständer wenigstens zwei Seiten besitzt.

13. Einheit nach einem der Ansprüche 11 oder 12, dadurch gekennzeichnet, daß die Leistenmuster (24) Plättchen aus magnetischem Werkstoff umfassen und daß der bewegliche Präsentationsständer (30) eine metallische Außenfläche besitzt, so daß die Muster auf dem beweglichen Präsentationsständer lösbar befestigbar sind.

14. Einheit nach einem der vorhergehenden Ansprüche, dadurch gekennzeichnet, daß die Einrichtungen für die Zusammenstellungsversuche eine im wesentlichen vertikale Tafel (20) umfassen, die bezüglich Drehung um eine zur Theke senkrechte Achse beweglich montiert ist, so daß dieselbe Seite dieser Tafel von beiden Seiten der Theke aus betrachtet werden kann.

15. Einheit nach Anspruch 14, dadurch gekennzeichnet, daß die Tafel (20) eine metallische Oberfläche hat, so daß sie die mit Plättchen aus magnetischem Werkstoff versehenen Leistenmuster aufnehmen kann.

16. Einheit nach Anspruch 14 oder 15, dadurch gekennzeichnet, daß die Tafel (20) im unteren Teil eine Randleiste (26) besitzt, so daß ein an die Tafel angelegtes Bild (22) gehalten wird.

17. Einheit nach einem der vorhergehenden Ansprüche, dadurch gekennzeichnet, daß sie ein Dach (14) umfaßt, das über der Theke (10) angeordnet ist und an dieser zur Bildung einer selbsttragenden Einheit durch Ständer (16) befestigt ist.

18. Einheit nach Anspruch 17, dadurch gekennzeichnet, daß sie am Dach befestigte Beleuchtungselemente (40) umfaßt und daß die Kabel zur Stromversorgung in den Ständern verlaufen.

## Claims

1. Compact and ergonomic unit for the framing of pictures with moulded bead comprising a counter (10) with a work surface (12) in which are integrated means (42) for cutting the bead, means (44) for stapling portions of cut bead, means (46) for cutting glass, cardboard and passe-partout, means (28) for displaying samples (24) of bead and means for the trial coordination of the picture - passe-partout-bead, as well as a single external electrical connection (98).

2. Unit according to Claim 1, characterised in that the integrated means (42) for cutting bead comprise a circular saw (48) fixed to a plate (50) integral with the work surface (12) and mounted to move by rotation with respect to this work surface.

3. Unit according to Claim 1 or 2, characterised in that the integrated means (42) for cutting bead also comprise a pair of vices (58) with two jaws (60, 62), one being fixed and the other movable, which are integral with the work surface (12), in order to secure the beads (72) with respect to the cutting means.

4. Unit according to Claim 3, characterised in that the movable jaw (62) is integral with mechanical drive means for automatic pressing.

5. Unit according to Claim 4, characterised in that the mechanical drive means comprise an electric jack.

6. Unit according to one of the preceding Claims, characterised in that the integrated means (42) for cutting bead are connected to a suction device (54) located below the work surface (12) of the counter (10).

7. Unit according to one of the preceding Claims, characterised in that the means (44) for stapling bead comprise a mechanical stapler (74) with a fixed plate (80) oriented at an angle of 45° with respect to the longitudinal axis of the counter.

8. Unit according to Claim 7, characterised in that the staple magazine (82) is integrated in the work surface (12) and accessible from the top.

9. Unit according to one of the preceding Claims, characterised in that the means (46) for cutting glass, cardboard and passe-partout comprise a removable plate (86) of soft material so that it can be cut by cutting tools.

10. Unit according to one of the preceding Claims, characterised in that the means (46) for cutting glass, cardboard and passe-partout comprise a graduated ruler (92) and a sliding guillotine (88), integral with the work surface (12).

11. Unit according to one of the preceding Claims, characterised in that the means (28) for displaying samples (24) of bead comprise at least one stand (30) mounted to rotate about its longitudinal axis.

12. Unit according to Claim 11, characterised in that the movable stand comprises at least two sides.

13. Unit according to one of Claims 11 or 12, characterised in that the samples (24) of bead comprise small plates of magnetic material and in that the movable stand (30) has an outer metal surface in order that the samples are removably fixed to the movable stand.

14. Unit according to one of the preceding Claims, characterised in that the means for coordination trials comprise a panel (20) which is substantially vertical and mounted to rotate about an axis perpendicular to the counter in order to allow visual access to the same side of this panel from both sides of the counter.

15. Unit according to Claim 14, characterised in that the panel (20) has a metal surface in order to receive the samples of bead provided with small plates of magnetic material.

16. Unit according to Claim 14 or 15, characterised in that the panel (20) comprises a raised edge (26) in its lower part in order to retain a picture (22) placed on this panel.

17. Unit according to one of the preceding Claims, characterised in that it comprises a roof (14) arranged above the counter (10) and fixed to the latter by uprights (16) so that the arrangement is self-supporting.

18. Unit according to Claim 17, characterised in that it comprises lighting (40) fixed to the roof and in that the electrical supply cables pass through the uprights.
